# FASCICULE DE BREVET EUROPEEN

(11) **EP 1 277 426 B1**
(45) Date de publication et mention de la délivrance du brevet: **28.09.2005**
(21) Numéro de dépôt: 02291809.8
(22) Date de dépôt: 17.07.2002
(51) Int. Cl.: A47J 17/18

(54) **Machine électrique de traitement d'aliments comportant un récipient amovible**
Elektrische Maschine zur Lebensmittelbearbeitung mit Wechselbehälter
Electrical machine for treating foodstuff having removable container

(30) Priorité: 18.07.2001 FR 0109625
(43) Date de publication de la demande: 22.01.2003
(73) Titulaire: Dito Sama, 23200 Aubusson (FR)
(72) Inventeur: Paturel, Bruno, 23200 Aubusson (FR); Rochez, Claude, 23200 St Marc à Fongier (FR); Bernard, Marc, 23250 St Hilaire le Chateau (FR)
(74) Mandataire: Jacobson, Claude

(56) Documents cités:
- WO-A-01/34007
- DE-A- 19 902 841
- FR-A- 1 410 369
- FR-A- 2 440 706
- FR-A- 2 618 998
- GB-A- 1 157 670
- US-A- 1 766 999
- US-A- 2 262 383
- US-A- 5 065 672
- PATENT ABSTRACTS OF JAPAN vol. 017, no. 221 (C-1054), 7 mai 1993 (1993-05-07) & JP 04 357909 A (MICHIYO KATO), 10 décembre 1992 (1992-12-10)

## Description

La présente invention concerne une machine électrique de traitement d'aliments comprenant un récipient de réception des aliments à traiter, dans lequel est disposé un outil de traitement rotatif, une embase contenant un moteur électrique et portant de façon amovible ledit récipient, et un arbre de transmission monté rotatif par rapport à l'embase et relié à l'arbre de sortie du moteur électrique, de façon à transmettre le mouvement de rotation de l'arbre de sortie du moteur à l'outil rotatif lorsque le récipient est en position de fonctionnement monté sur l'embase.

On connaît déjà, dans l'état de la technique, des machines d'épluchage de légumes dont le récipient présente une paroi de fond pourvue d'une ouverture centrale, dans laquelle est logé un palier de roulement recevant à rotation l'outil de traitement. Ladite paroi de fond est ainsi obturée par le palier et la tige définissant l'axe de rotation de l'outil, le fond du récipient étant ainsi rendu étanche à l'eau. Dans cette configuration, l'outil est lié de façon non extractible (ou seulement à l'aide d'outils de démontage) au fond du récipient.

Un tel appareil rend difficile le nettoyage du récipient, ainsi que les opérations de vidange de l'eau utilisée pour le traitement des aliments. Cette eau est généralement amenée en continu par une ouverture supérieure du récipient, et s'écoule au travers de l'outil vers le fond.

De ce fait, on constate une dégradation dans le temps des conditions d'hygiène liées à l'utilisation de tels appareils.

D'autre part, une telle configuration nécessite l'utilisation d'un palier de roulement pour l'arbre de transmission en sortie du moteur, et d'un autre palier pour la tige solidaire de l'outil. Le coût de fabrication des appareils de ce type se trouve par conséquent grevé de façon sensible. Le document FR-1410369 décrit le préambule de la revendication 1.

Pour remédier à ces inconvénients, la machine électrique de traitement d'aliments suivant l'invention comprend les caractéristiques techniques décrites dans les revendications 1 à 7.

L'invention va maintenant être décrite en regard des dessins annexés donnés seulement à titre d'exemple et sur lesquels :
- la Figure 1 est une vue en perspective éclatée d'une machine d'épluchage suivant l'invention ;
- la Figure 2 est une vue en perspective de la machine de la Figure 1 assemblée, en position de fonctionnement; et
- la Figure 3 est une vue en coupe dans le plan médian P représenté à la Figure 2.

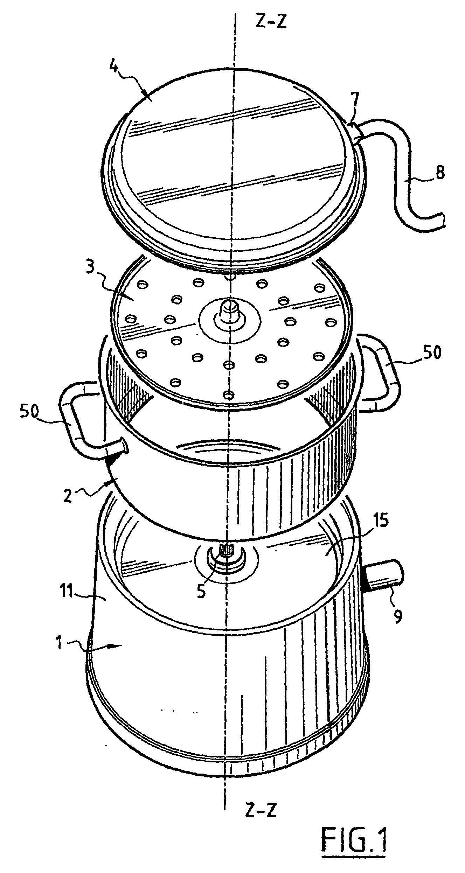

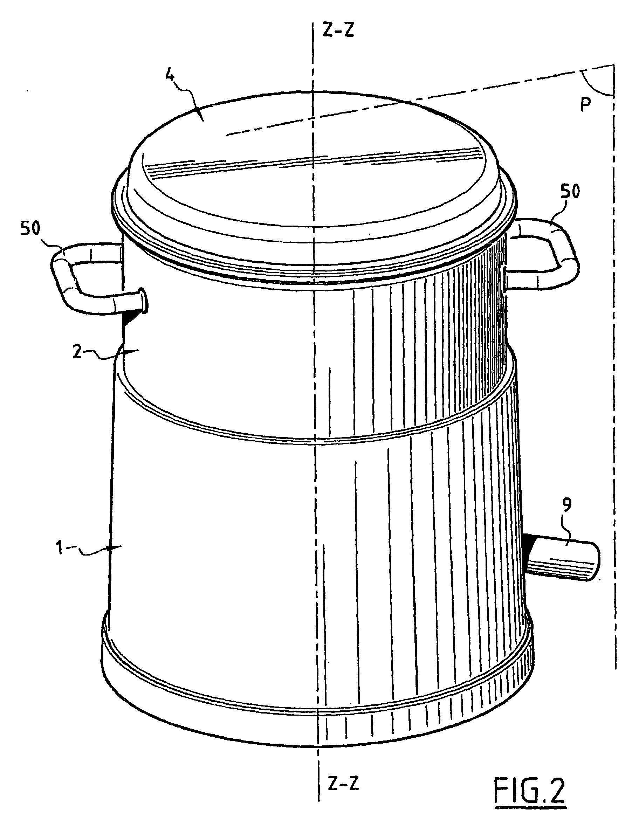

On se réfère tout d'abord aux Figures 1 et 2 qui illustrent une machine d'épluchage d'aliments conforme à l'invention.

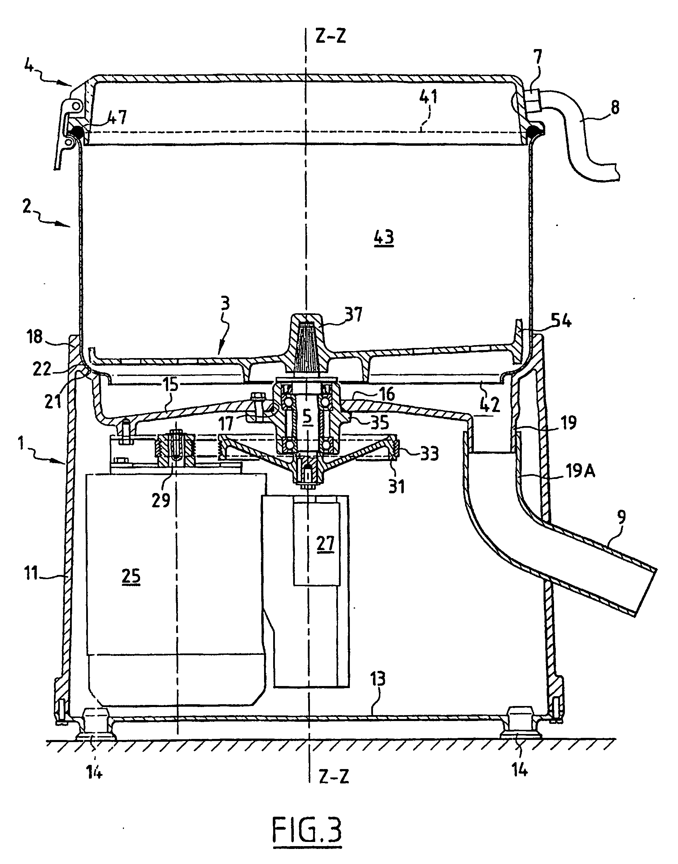

L'ensemble de la machine est de forme générale cylindrique, cette machine comportant une embase 1 destinée à reposer sur un plan de travail. Elle contient un moteur électrique et un ensemble de transmission (qui sont représentés sur la Figure 3), et présente une façade dotée de différents organes de commande (non représentés).

La machine comprend d'autre part un récipient 2 destiné à être, lors du fonctionnement de la machine, superposé coaxialement sur l'embase 1, et à contenir, dans sa partie inférieure, un outil de traitement 3 des aliments.

La machine comporte en outre un couvercle 4 de fermeture du récipient 2, adapté pour coiffer le récipient 2 lors du fonctionnement de la machine et ainsi éviter les projections d'eau ou de matières.

Sur les Figures, on a représenté l'axe vertical Z-Z de la machine, définissant l'axe commun des éléments 1, 2, 3, 4 décrits précédemment. Cet axe Z-Z correspond à l'axe de rotation de l'outil 3, lequel est entraîné par un arbre de transmission 5 en saillie de l'embase 1.

Le couvercle 4 est pourvu sur une face périphérique, d'une buse d'alimentation d'eau 7 adaptée pour être raccordée par exemple à un conduit flexible 8, de façon à réaliser l'aspersion continue des aliments durant le fonctionnement de l'appareil, à l'intérieur du récipient 2.

Comme il sera mieux vu en référence à la Figure 3, l'eau s'écoule de l'intérieur du récipient 2 vers le volume intérieur de l'embase 1, et est évacué par un conduit d'évacuation d'eau dont l'extrémité fait saillie de l'embase 1.

On va maintenant décrire plus en détail la structure de chacun des éléments de la machine d'épluchage en référence aux Figures 1 à 3.

L'embase 1 présente une paroi périphérique 11 qui n'est pas exactement cylindrique, mais dans l'exemple représenté de forme générale conique, dont les génératrices sont inclinées légèrement par rapport à l'axe vertical Z-Z. la paroi périphérique 11 est solidaire, à son extrémité inférieure, d'une paroi de fond 13, sous laquelle sont formés des plots 14 d'appui sur le plan de travail. Du côté de l'autre extrémité de la paroi périphérique 11, est formée une paroi supérieure 15 d'une pièce avec ladite paroi périphérique 11. Cette paroi supérieure 15 est conformée sensiblement en tronc de cône, dont la partie centrale plane 16 présente une ouverture axiale 17 de passage de l'arbre de transmission 5. La paroi supérieure 15 définit avec le bord supérieur 18 de la paroi périphérique 11 une cavité de réception du récipient 2. Elle est conformée de façon à converger vers un embout cylindrique 19 constituant un conduit de vidange orienté vers le bas. L'embout 19 est relié au conduit d'évacuation 9 par l'intermédiaire d'un raccord rigide 19A. L'embout 19 est formé d'une pièce avec la paroi supérieure 15 et la paroi périphérique 11.

Entre le bord supérieur 18 et la paroi supérieure 15, est formé un épaulement périphérique 21, intérieurement par rapport à la paroi périphérique 11. Cet épaulement périphérique 21 constitue un appui pour une partie inférieure 22 complémentaire du récipient 2.

La paroi périphérique 11, le plateau supérieur 15 et la paroi de fond 13 définissent un volume intérieur de l'embase 1, dans lequel sont logés un moteur électrique 25, un boîtier de commande 27 monté sur le moteur électrique 25 et relié aux organes de commande en façade de l'appareil, et des éléments de transmission du mouvement rotatif en sortie du moteur. Le moteur électrique 25 présente un arbre de sortie 29 qui entraîne en rotation une poulie 31 solidaire de l'arbre de transmission 5, par l'intermédiaire d'une courroie flexible 33. L'arbre de transmission 5 est monté rotatif par rapport à la paroi supérieure 15, au travers de l'ouverture 17, par l'intermédiaire d'un palier de roulement 35. L'extrémité supérieure de l'arbre 5 est de forme tronconique à denture radiale, adaptée pour coopérer avec un manchon central 37 de l'outil 3 de forme intérieure complémentaire, de façon à entraîner l'outil 3 en rotation solidaire avec l'arbre 5.

Les formes tronconiques complémentaires de l'extrémité d'arbre 5 et du manchon central 37 réalisent en outre le blocage axial vers le bas de l'outil 3.

Le récipient 2 est formé d'une paroi sensiblement cylindrique dont le bord inférieur forme un retour intérieur, qui définit la partie inférieure complémentaire 32 de l'épaulement périphérique 21. Ainsi, le récipient 2, ouvert à ses deux extrémités, définit une ouverture supérieure 41 d'introduction des aliments, et une ouverture inférieure 42 d'évacuation d'eau. Chacune des deux ouvertures 41, 42 s'étend sur une section correspondant à l'essentiel de la section du cylindre définissant la forme générale du récipient 2.

On réalise ainsi un appareil permettant de récupérer l'eau et les épluchures sensiblement sur la totalité de la surface située au-dessous de l'outil 3, le fond du récipient étant constitué par l'outil lui-même. Le poids du récipient est, par ailleurs, réduit de façon importante.

Le volume intérieur 43 délimité par l'ouverture supérieure 41 et la surface supérieure de l'outil 3 constitue le volume de réception des aliments à traiter.

L'ouverture supérieure 41, en phase de fonctionnement de l'appareil, est obturée par le couvercle 4, une liaison étanche à l'eau entre les bords périphériques du couvercle 4 et le récipient 2 étant assurée par un joint torique périphérique 47.

Comme cela est visible sur les Figures 1 et 2, le récipient 2 présente deux poignées 50 diamétralement opposées, en saillie de la surface périphérique du récipient 2.

Lors du fonctionnement de l'appareil, ainsi que cela a été représenté sur la Figure 3, le récipient 2 repose, par sa partie inférieure 22, sur l'épaulement périphérique 21 de la paroi périphérique 11 de l'embase 1, de sorte que le montage du récipient 2 sur l'embase 1 est amovible. Il suffit à un utilisateur désirant désolidariser le récipient 2 de l'embase 1 de soulever le récipient, ce qui est facilité par les poignées 50.

L'outil 3 se présente comme un plateau sensiblement circulaire, dont la surface supérieure est abrasive. Ce plateau, afin d'assurer un brassage des aliments à traiter, présente une légère conicité d'axe légèrement incliné par rapport à l'axe vertical Z-Z.

Le plateau 3 est, dans le mode de réalisation représenté, perforé afin de permettre l'écoulement de l'eau vers le fond de l'appareil, mais on peut concevoir un plateau dénué de perforations, auquel cas l'eau est évacuée par sa périphérie.

Dans la position d'utilisation qui a été représentée à la Figure 3, l'outil 3, par l'intermédiaire du manchon 37, repose axialement sur l'arbre 5, tandis que ses bords périphériques 54 s'étendent sans contact au-dessus de l'épaulement périphérique 51, au voisinage de celui-ci. L'outil 3 est monté de façon amovible sur l'arbre de transmission 5, étant entendu qu'il suffit à un utilisateur de soulever celui-ci pour le retirer de l'extrémité supérieure dentée de l'arbre 5.

Comme on le voit, lorsqu'un utilisateur extrait le récipient 2 de l'embase 1 à partir de la position de fonctionnement de l'appareil représentée à la Figure 3, les bords périphériques 54 de l'outil 3 portent sur l'épaulement périphérique 21, ce qui permet l'extraction simultanée du récipient 2 et de l'outil 3 par rapport à l'embase 1.

On voit que, de cette façon, le nettoyage de l'appareil est grandement facilité, l'outil étant rendu très facilement détachable de l'arbre de transmission 5, et amovible par rapport au récipient 21.

## Revendications

1. Machine électrique de traitement d'aliments comprenant un récipient (2) de réception des aliments à traiter, dans lequel est disposé un outil de traitement (3) rotatif conformé sensiblement en plateau circulaire, une embase (1) contenant un moteur électrique (25) et portant de façon amovible ledit récipient (2), et un arbre de transmission (5) monté rotatif par rapport à l'embase (1) et relié à l'arbre de sortie (29) du moteur électrique (25), de façon à transmettre le mouvement de rotation de l'arbre de sortie (29) du moteur (25) à l'outil rotatif (3) lorsque le récipient (2) est en position de fonctionnement monté sur l'embase (1), ledit outil (3) étant lui-même monté de façon amovible sur l'arbre de transmission (5) et par rapport au récipient (2), le récipient (2) présentant une paroi périphérique définissant une ouverture supérieure (41) d'introduction des aliments à traiter, et une ouverture inférieure (42) d'évacuation d'eau, **caractérisée en ce que** ladite paroi périphérique présente, vers son bord inférieur, un retour intérieur (22) qui définit un épaulement périphérique sur lequel portent les bords périphériques (54) de l'outil (3) lors du retrait du récipient (2) de l'embase (1), l'ouverture inférieure (42) s'étendant sur l'essentiel de la section du récipient.

2. Machine électrique suivant la revendication 1, **caractérisée en ce qu'**en position de fonctionnement du récipient (2) et de l'outil (3), les bords périphériques (54) de l'outil (3) s'étendent sans contact au voisinage dudit épaulement (22), l'outil (3) étant en butée axiale sur l'arbre de transmission (5).

3. Machine électrique suivant la revendication 1 ou 2, **caractérisée en ce que** l'embase (1) est solidaire d'une gouttière d'évacuation d'eau, comportant une paroi (15) qui s'étend sous l'ouverture inférieure (42) du récipient (2) et l'outil (3), lorsque ces derniers sont en position de fonctionnement, ladite paroi (15) présentant des surfaces inclinées convergeant vers un conduit de vidange (19) orienté vers le bas.

4. Machine électrique suivant l'une quelconque des revendications 1 à 3, **caractérisée en ce que** le récipient (2) est pourvu de poignées de préhension (50) solidaires, en saillie dudit récipient (2), facilitant l'extraction du récipient (2) de l'embase (1).

5. Machine électrique suivant l'une quelconque des revendications 1 à 4, **caractérisée en ce qu'**elle est constituée d'une machine d'épluchage de légumes.

6. Machine électrique suivant la revendication 5, **caractérisée en ce que** ledit outil de traitement (3) est un plateau abrasif.

7. Machine électrique suivant l'une quelconque des revendications 1 à 6, **caractérisée en ce qu'**elle est constituée d'une machine d'essorage d'aliments, notamment de légumes.

## Patentansprüche

1. Elektrische Maschine zum Behandeln von Lebensmitteln mit einem Behälter (2) zur Aufnahme der zu behandelnden Lebensmittel, in dem ein drehendes Behandlungswerkzeug (3) in Form einer im Wesentlichen kreisförmigen Scheibe, mit einer Basis (1), die einen elektrischen Motor (25) und einen abnehmbaren Behälter (2) aufnimmt, und mit einer Antriebswelle (5), die in Bezug zu der Basis (1) drehbar ist und mit der Ausgangswelle des elektrischen Motors (25) verbunden ist, um eine Drehbewegung der Ausgangswelle (29) des Motors (25) auf das drehende Werkzeug (3) zu übertragen, wenn der Behälter (2) in seiner Betriebsposition auf der Basis (1) ist, wobei das Werkzeug (3) selbst auswechselbar auf der Antriebswelle (5) und in Bezug zu dem Behälter (2) montiert ist, wobei der Behälter (2) eine Umfangswand aufweist, die eine obere Öffnung (41) zum Einführen von zu behandelnden Lebensmitteln und eine untere Öffnung (42) zum Absaugen von Wasser begrenzt, **dadurch gekennzeichnet, dass** die Umfangswand an ihrem unteren Rand eine nach innen gerichtete Einbuchtung (22) aufweist, die eine Umfangsschulter begrenzt, auf der sich die Umfangsränder (54) des Werkzeuges (3) während des Abnehmens des Behälters (2) von der Basis (1) abstützen, wobei die untere Öffnung (42) sich im Wesentlichen über den gesamten Bereich des Behälters erstreckt.

2. Elektrische Maschine nach Anspruch 1, **dadurch gekennzeichnet, dass** in der Betriebsposition des Behälters (2) und des Werkzeuges (3) die Umfangsränder (54) des Werkzeuges (3) sich ohne Kontakt in der Nachbarschaft der Schulter (22) erstrecken, wobei das Werkzeug (3) in axialer Richtung an der Antriebswelle (5) anliegt.

3. Elektrische Maschine nach Anspruch 1 oder 2, **dadurch gekennzeichnet, dass** die Basis (1) verbunden ist mit einer Abflusswanne für Wasser, die eine Wand (15) aufweist, die sich unterhalb der unteren Öffnung (42) des Behälters (2) und des Werkzeuges (3) erstreckt, wenn diese letzteren in einer Betriebsposition sind, wobei die Wand (15) geneigte Oberflächen aufweist, die in Richtung einer Entleerungsöffnung (19), die nach unten gerichtet ist, geneigt sind.

4. Elektrische Maschine nach einem der Ansprüche 1 bis 3, **dadurch gekennzeichnet, dass** der Behälter (2) mit festen Handgriffen (50) versehen ist, die von dem Behälter (2) wegragen und die Abnahme des Behälters (2) von der Basis (1) erleichtern.

5. Elektrische Maschine nach einem der Ansprüche 1 bis 4, **dadurch gekennzeichnet, dass** sie als Maschine zum Säubern von Gemüsen ausgebildet ist.

6. Elektrische Maschine nach Anspruch 5, **dadurch gekennzeichnet, dass** das Behandlungswerkzeug (3) eine Schleifscheibe ist.

7. Elektrische Maschine nach einem der Ansprüche 1 bis 6, **dadurch gekennzeichnet, dass** sie als Maschine zum Trocknen von Lebensmitteln, insbesondere von Gemüsen, ausgebildet ist.

## Claims

1. Electrical machine for treating foodstuffs comprising a container (2) for receiving the foodstuffs to be treated, in which a rotary treatment tool (3) shaped substantially in the form of a circular plate is arranged, a base (1) containing an electric motor (25) and removably bearing the said container (2), and a transmission shaft (5) mounted rotatably with respect to the base (1) and connected to the output shaft (29) of the electric motor (25), so as to transmit the rotational movement of the output shaft (29) of the motor (25) to the rotary tool (3) when the container (2) is in the operating position mounted on the base (1), the said tool (3) itself being mounted removably on the transmission shaft (5) and with respect to the container (2), the container (2) having a peripheral wall defining an upper opening (41) for introducing the foodstuffs to be treated, and a lower opening (42) for draining water, **characterised in that** the said peripheral wall has, towards its lower edge, an inner return (22) which defines a peripheral shoulder on which the peripheral edges (54) of the tool (3) bear during withdrawal of the container (2) from the base (1), the lower opening (42) extending over most of the section of the container.

2. Electrical machine according to Claim 1, **characterised in that**, in the operating position of the container (2) and of the tool (3), the peripheral edges (54) of the tool (3) extend without contact in the vicinity of the said shoulder (22), the tool (3) being in axial abutment on the transmission shaft (5).

3. Electrical machine according to Claim 1 or 2, **characterised in that** the base (1) is integral with a water drainage gutter, having a wall (15) which extends under the lower opening (42) of the container (2) and the tool (3), when these latter are in the operating position, the said wall (15) having inclined surfaces converging towards a downwardly oriented discharge conduit (19).

4. Electrical machine according to any one of Claims 1 to 3, **characterised in that** the container (2) is provided with integral gripping handles (50), projecting from the said container (2), which facilitate extraction of the container (2) from the base (1).

5. Electrical machine according to any one of Claims 1 to 4, **characterised in that** it consists of a machine for peeling vegetables.

6. Electrical machine according to Claim 5, **characterised in that** the said treatment tool (3) is an abrasive plate.

7. Electrical machine according to any one of Claims 1 to 6, **characterised in that** it consists of a machine for spinning foodstuffs, in particular vegetables.
